# EUROPÄISCHE PATENTSCHRIFT

(11) **EP 3 811 147 B1**
(45) Veröffentlichungstag und Bekanntmachung des Hinweises auf die Patenterteilung: **03.01.2024**
(21) Anmeldenummer: 19734659.6
(22) Anmeldetag: 21.06.2019
(51) Int. Cl.: G02C 7/10

(54) **OPTISCHER FILTER FÜR SONNENBRILLEN**
OPTICAL FILTER FOR SUNGLASSES
FILTRE OPTIQUE POUR LUNETTES DE SOLEIL

(30) Priorität: 25.06.2018 AT 505212018
(43) Veröffentlichungstag der Anmeldung: 28.04.2021
(73) Patentinhaber: Silhouette International Schmied AG, 4020 Linz (AT)
(72) Erfinder: SPINDELBALKER, Rupert, 4048 Puchenau (AT); BIGEL, Karin Toni, 81737 München (DE); NAMMOUR, Marie - Christiane, Saint Claude 39200 (FR); LE QUANG, Kévin Anh Quoc, Saint Claude 39200 (FR)
(74) Vertreter: Hübscher & Partner Patentanwälte GmbH
(86) Internationale Anmeldenummer: PCT/AT2019/060206
(87) Internationale Veröffentlichungsnummer: WO 2020/000006

(56) Entgegenhaltungen:
- EP-A1- 2 946 245
- DE-A1-102015 117 540
- US-A1- 2017 299 895

## Beschreibung

### Technisches Gebiet

Die Erfindung bezieht sich auf einen optischen Filter für Sonnenbrillen, mit einem Transmissionsgrad von weniger als 20 % für Lichtwellenlängen von 400 nm bis 650 nm.

### Stand der Technik

Aus dem Stand der Technik sind optische Filter für Sonnenbrillen bekannt, die insbesondere zur Reduktion von für das menschliche Auge schädlichem UV-Licht sowie von die Sicht beeinträchtigenden Lichtreflexionen einen Transmissionsgrad von weniger als 20 % für Lichtwellenlängen bis 650 nm aufweisen. Da bei derart niedrigen Transmissionsgraden in diesem Lichtwellenlängenbereich nicht nur schädliches UV-Licht gefiltert, sondern auch andere Spektralfarben gedämpft werden, besteht das Problem, dass dadurch die Farbwahrnehmung des Brillenträgers, insbesondere die Wahrnehmung von Farbsättigung und Farbtemperatur, eingeschränkt wird. Dies hat zur Folge, dass die durch die Filter betrachteten Farbtöne nicht nur als fahl wahrgenommen werden, sondern dass es bei längerem Tragen der Brille auch zu Ermüdungserscheinungen beim Brillenträger zufolge des verstärkt notwendigen Weißabgleiches durch die chromatische Adaption des Auges kommt. Sonnenbrillen mit derartigen Filtern sind daher nicht geeignet, über einen längeren Zeitraum ununterbrochen getragen zu werden.

Es existieren zudem optische Filter für Sportbrillen, insbesondere für Skibrillen, die eine Verstärkung gewisser Lichtwellenlängenbereiche zur Verbesserung der Sehschärfe und somit des Reaktionsverhaltens, sowie eine Dämpfung gewisser Lichtwellenlängenbereiche zur Kontrasterhöhung aufweisen. Nachteilig ist daran allerdings, dass es aufgrund der hohen Schwankungsbreiten sowie der hohen lokalen Änderungsraten des Transmissionsgradverlaufes zu Farbverzerrungen kommt, weshalb auch beim Tragen solcher Sportbrillen eine hohe chromatische Adaption des Auges nötig ist, die zu Ermüdungserscheinungen führt. Abgesehen davon weisen derartige Sportbrillenfilter im Lichtwellenlängenbereich bis 650 nm Transmissionsgrade von über 30 %, mitunter sogar über 60 % auf und sind demnach nicht für den Einsatz in Sonnenbrillen, die einen deutlich niedrigeren Transmissionsgrad aufweisen sollten, geeignet.

Relevante Druckschriften sind zum Beispiel DE 10 2015 117540, US 2017/299895 oder EP 2 946 245.

### Darstellung der Erfindung

Der Erfindung liegt somit die Aufgabe zugrunde, einen optischen Filter der eingangs geschilderten Art so auszugestalten, dass trotz einer guten UV-Filterwirkung insgesamt eine verbesserte Farbwahrnehmung erreicht und das ermüdungsfreie Tragen der Sonnenbrille auch über einen längeren Zeitraum ermöglicht wird.

Die Erfindung löst die gestellte Aufgabe ausgehend von einem optischen Filter der eingangs geschilderten Art dadurch, dass das Transmissionsspektrum im Lichtwellenlängenbereich zwischen 440 nm und 470 nm sowie zwischen 570 nm und 590 nm je ein lokales Transmissionsmaximum und im Lichtwellenlängenbereich zwischen 600 nm und 620 nm ein lokales Transmissionsmaximum oder einen Transmissionssattelpunkt umfasst, wobei der Transmissionsgrad unterhalb der Verbindungslinie des lokalen Transmissionsmaximums zwischen 440 nm und 470 nm und des lokalen Transmissionsmaximums zwischen 570 nm und 590 nm einen im Wesentlichen konvexen Gesamtverlauf bei einer Schwankungsbreite unter 8 % aufweist.

Es hat sich gezeigt, dass durch das Vorsehen je eines lokalen Transmissionsmaximums zwischen 440 nm und 470 nm sowie zwischen 570 nm und 590 nm und eines lokalen Transmissionsmaximums oder eines Transmissionssattelpunktes zwischen 600 nm und 620 nm aufgrund der damit einhergehenden höheren unschädlichen Blau-, Gelb- sowie Orange- / Rotanteile im Transmissionsspektrum des optischen Filters eine frischere Farbwahrnehmung, insbesondere unter Tageslichtbedingungen, auch bei niedrigen Transmissionsgraden unter 20 % erzielt wird. Eine Erhöhung des Gelbanteils des Transmissionsspektrums durch eine Anhebung des Transmissionsgrades zwischen 570 nm und 590 nm wurde bisher vermieden, da dies grundsätzlich zu einem Kontrastverlust zwischen den Rot- und Grünanteilen des Transmissionsspektrums führt, wodurch nicht nur Menschen mit einer Rot-Grün-Sehschwäche benachteiligt wären, sondern sich dadurch insgesamt die Farbsättigung verringern würde. Um diesen Nachteil zu vermeiden, weist der Transmissionsgrad des erfindungsgemäßen optischen Filters einen im Wesentlichen konvexen Gesamtverlauf zwischen 470 nm und 570 nm auf, wobei sich der Transmissionsgradverlauf in diesem Lichtwellenlängenbereich unterhalb der Verbindungsstrecke des im Blaubereich und des im Gelbbereich des Transmissionsspektrums liegenden lokalen Transmissionsmaximums befindet. Dies hat überraschenderweise zur Folge, dass der Kontrast zwischen den Rot- und Grünanteilen trotz eines höheren Gelbanteils erhöht wird. Dadurch, dass der konvexe Gesamtverlauf des Transmissionsgrades zwischen 470 nm und 570 nm eine im Wesentlichen durchgehend positive Krümmung sowie eine Schwankungsbreite unter 8 % aufweist, werden unmittelbar aufeinanderfolgende, schwankende Transmissionsgradänderungen vermieden und somit ein gleichmäßigeres, verzerrungsfreies Transmissionsverhalten erzielt. Folglich werden die Farbwahrnehmung beeinträchtigende Farbverzerrungen deutlich reduziert und die Voraussetzungen für eine bessere Farbadaption geschaffen. Die chromatische Adaption der Augen wird zufolge dieser Merkmale erleichtert, wodurch das Tragen von erfindungsgemäße Filter aufweisenden Sonnenbrillen auch über längere Zeiträume ermüdungsfrei erfolgen kann. Um die Farbwiedergabe bzw. -wahrnehmung zudem weiter zu verbessern, kann der Transmissionsgrad bis zum lokalen Transmissionsmaximum zwischen 440 nm und 470 nm im Blaubereich einen im Wesentlichen stetig ansteigenden, konvexen Gesamtverlauf aufweisen. Für ein noch besseres Kontrastverhalten insbesondere bei erfindungsgemäßen optischen Filtern mit Grau-, Grün- oder Brauntönung kann ein weiteres lokales Transmissionsminimum zwischen 625 nm und 655 nm vorgesehen sein.

Um einen noch höheren Kontrast zwischen den Rot- und Grünanteilen zu erzielen und Farbverzerrungen weiter zu reduzieren, wird vorgeschlagen, dass der im Wesentlichen konvexe Gesamtverlauf des Transmissionsgrades unterhalb der Verbindungslinie des lokalen Transmissionsmaximums zwischen 440 nm und 470 nm und des lokalen Transmissionsmaximums zwischen 570 nm und 590 nm genau ein Transmissionsminimum bildet.

Besonders günstige Bedingungen ergeben sich in diesem Zusammenhang, wenn das lokale Transmissionsmaximum zwischen 440 nm und 470 nm einen Transmissionsgrad zwischen 5 und 15 %, das lokale Transmissionsminimum zwischen 470 nm und 570 nm einen Transmissionsgrad unter 10 %, das lokale Transmissionsmaximum zwischen 570 nm und 590 nm einen Transmissionsgrad zwischen 10 und 15 % und zwischen 600 nm und 620 nm das lokale Transmissionsmaximum einen Transmissionsgrad zwischen 10 und 20 % oder der Transmissionssattelpunkt einen Transmissionsgrad zwischen 5 und 10 % aufweisen. Zudem kann das gegebenenfalls vorgesehene lokale Transmissionsminimum zwischen 625 nm und 655 nm einen Transmissionsgrad unter 10 % aufweisen.

Um eine qualitativ hochwertige Fertigung der erfindungsgemäßen optischen Filter bei hoher Produktionsgeschwindigkeit und Reproduzierbarkeit zu ermöglichen und deren Transmissionsverhalten auf besonders günstige Weise einzustellen, können die optischen Filter aus einer Kunststoffmatrix gefertigt sein, in die zwischen 400 und 700 ppm eines UV-Filterpigments, zwischen 33 und 98 ppm eines Blaupigments, zwischen 75 und 96 ppm eines Gelbpigments, zwischen 124 und 174 ppm eines Rotpigments und zwischen 37 und 115 ppm eines Grünpigments dispergiert sind. Dabei können anorganische und / oder organische Pigmente eingesetzt werden. Die optischen Filter können im Spritzgussverfahren aus einem für Optikanwendungen geeigneten thermoplastischen Kunststoff, beispielsweise Polycarbonat, gefertigt werden. Demnach werden die Pigmente dem Kunststoffgranulat beigemengt und die Schmelze homogenisiert. Besonders günstige Fertigungsbedingungen können beispielsweise erzielt werden, wenn zunächst Vormischungen erstellt werden, wobei jede Vormischung UV-Filterpigmente sowie Pigmente einer bestimmten Farbe aufweist. Die so erhaltenen Vormischungen unterschiedlicher Farbe werden anschließend der Reihe nach mit dem Kunststoffgranulat vermengt.

### Kurze Beschreibung der Erfindung

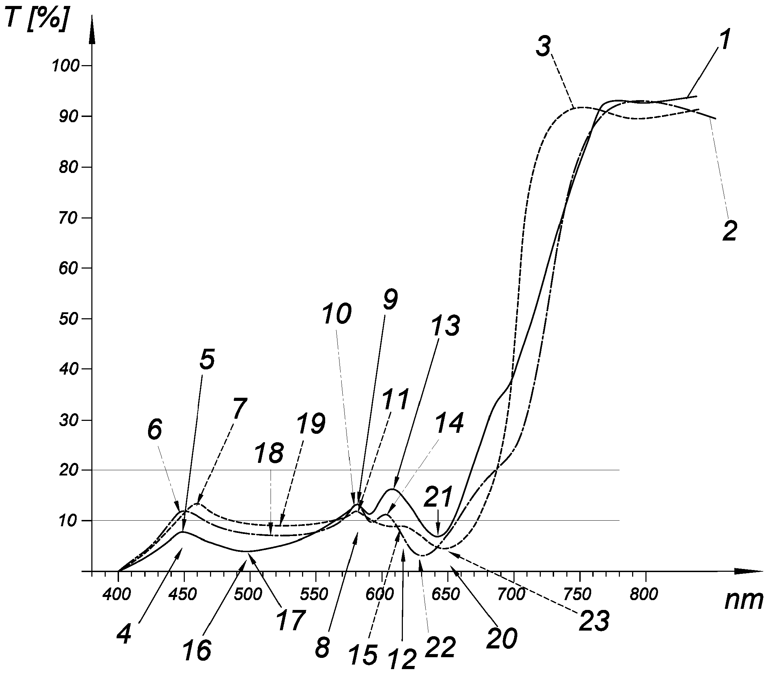

In der Zeichnung sind Ausführungsformen des Erfindungsgegenstandes beispielsweise dargestellt und zwar anhand von Transmissionsspektren für erfindungsgemäße optische Filter mit jeweils unterschiedlicher Tönung.

### Weg zur Ausführung der Erfindung

Erfindungsgemäße optischer Filter mit jeweils unterschiedlichen Tönungen weisen Transmissionsspektren 1, 2, und 3 auf. Dabei beschreibt das Transmissionsspektrum 1 beispielsweise den prozentualen Verlauf des Transmissionsgrades T im Lichtwellenlängenbereich von 380 nm bis 800 nm eines erfindungsgemäßen optischen Filters mit Brauntönung. Dementsprechend sind das Transmissionsspektrum 2 einem erfindungsgemäßen optischen Filter mit Grautönung und das Transmissionsspektrum 3 einem erfindungsgemäßen optischen Filter mit Grüntönung zuzuordnen.

Die Transmissionsspektren 1, 2 und 3 weisen im Lichtwellenlängenbereich 4 zwischen 440 nm und 470 nm je ein lokales Transmissionsmaximum 5, 6 bzw. 7 sowie im Lichtwellenlängenbereich 8 zwischen 570 nm und 590 nm je ein lokales Transmissionsmaximum 9, 10 bzw. 11 auf. Im Lichtwellenlängenbereich 12 zwischen 600 nm und 620 nm weisen die Transmissionsspektren 1 und 2 zudem ein lokales Transmissionsmaximum 13 bzw. 14 auf, während das Transmissionsspektrum 3 im dortigen Lichtwellenbereich 12 einen Transmissionssattelpunkt 15 umfasst.

Wie in der Zeichnung gut zu erkennen ist, weisen die Transmissionsgrade der Transmissionsspektren 1, 2 und 3 zwischen den im Lichtwellenbereich 4 liegenden Transmissionsmaxima 5, 6 und 7 und den im Lichtwellenbereich 8 liegenden Transmissionsmaxima 9, 10 und 11 einen im Wesentlichen konvexen Gesamtverlauf 16 bei einer Schwankungsbreite unter 8 % auf. Dabei bildet der konvexe Gesamtverlauf 16 der Transmissionsspektren 1, 2 und 3 im dortigen Lichtwellenlängenbereich zwischen 470 nm und 570 nm genau jeweils genau ein Transmissionsminimum 17, 18 bzw. 19 aus.

Gemäß einer Ausführungsform können die Transmissionsspektren 1, 2 und 3 im Lichtwellenbereich 20 zwischen 625 nm und 655 nm Transmissionsminima 21, 22 bzw. 23 umfassen.

Das Transmissionsmaximum 5 des Transmissionsspektrums 1 kann bei 7 - 9 %, das Transmissionsminimum 17 bei 4 - 6 %, das Transmissionsmaximum 9 bei 12 - 14 %, das Transmissionsmaximum 13 bei 15 - 17 % und das Transmissionsminimum 21 bei 7 - 9 % liegen.

Das Transmissionsmaximum 6 des Transmissionsspektrums 2 kann bei 11 - 13 %, das Transmissionsminimum 18 bei 7 - 9 %, das Transmissionsmaximum 10 bei 12 - 14 %, das Transmissionsmaximum 14 bei 10 - 12 % und das Transmissionsminimum 22 bei 3 - 5 % liegen.

Das Transmissionsmaximum 7 des Transmissionsspektrums 3 kann bei 12 - 14 %, das Transmissionsminimum 19 bei 8,5 - 9,5 %, das Transmissionsmaximum 11 bei 11 - 13 %, der Transmissionssattelpunkt 15 bei 8 - 9 % und das Transmissionsminimum 23 bei 4 - 6 % liegen.

## Patentansprüche

1. Optischer Filter für Sonnenbrillen, mit einem Transmissionsgrad von weniger als 20 % für Lichtwellenlängen von 400 nm bis 650 nm, **dadurch gekennzeichnet, dass** das Transmissionsspektrum (1, 2, 3) im Lichtwellenlängenbereich zwischen 440 nm und 470 nm (4) sowie zwischen 570 nm und 590 nm (8) je ein lokales Transmissionsmaximum (5, 6, 7 bzw. 9, 10, 11) und im Lichtwellenlängenbereich zwischen 600 nm und 620 nm (12) ein lokales Transmissionsmaximum (13, 14) oder einen Transmissionssattelpunkt (15) umfasst, wobei der Transmissionsgrad unterhalb der Verbindungslinie des lokalen Transmissionsmaximums (5, 6, 7) zwischen 440 nm und 470 nm und des lokalen Transmissionsmaximums (9, 10, 11) zwischen 570 nm und 590 nm einen im Wesentlichen konvexen Gesamtverlauf (16) bei einer Schwankungsbreite unter 8 % aufweist.

2. Optischer Filter nach Anspruch 1, **dadurch gekennzeichnet, dass** der im Wesentlichen konvexe Gesamtverlauf (16) des Transmissionsgrades unterhalb der Verbindungslinie des lokalen Transmissionsmaximums (5, 6, 7) zwischen 440 nm und 470 nm und des lokalen Transmissionsmaximums (9, 10, 11) zwischen 570 nm und 590 nm genau ein Transmissionsminimum (17, 18, 19) bildet.

3. Optischer Filter nach Anspruch 1 oder 2, **dadurch gekennzeichnet, dass** das lokale Transmissionsmaximum (5, 6, 7) zwischen 440 nm und 470 nm einen Transmissionsgrad zwischen 5 und 15 %, das lokale Transmissionsminimum (17, 18, 19) zwischen 470 nm und 570 nm einen Transmissionsgrad unter 10 %, das lokale Transmissionsmaximum (9, 10, 11) zwischen 570 nm und 590 nm einen Transmissionsgrad zwischen 10 und 15 % und zwischen 600 nm und 620 nm das lokale Transmissionsmaximum (13, 14) einen Transmissionsgrad zwischen 10 und 20 % oder der Transmissionssattelpunkt (15) einen Transmissionsgrad zwischen 5 und 10 % aufweisen.

4. Optischer Filter nach einem der Ansprüche 1 bis 3, **gekennzeichnet durch** eine Kunststoffmatrix, in die zwischen 400 und 700 ppm eines UV-Filterpigments, zwischen 33 und 98 ppm eines Blaupigments, zwischen 75 und 96 ppm eines Gelbpigments, zwischen 124 und 174 ppm eines Rotpigments und zwischen 37 und 115 ppm eines Grünpigments dispergiert sind.

## Claims

1. Optical filter for sunglasses, having a transmittance of less than 20% for light wavelengths from 400 nm to 650 nm, **characterized in that** the transmittance spectrum (1, 2, 3) in the light wavelength range between 440 nm and 470 nm (4) and between 570 nm and 590 nm (8) in each case comprises a local transmittance maximum (5, 6, 7 or 9, 10, 11) and in the light wavelength range between 600 nm and 620 nm (12) a local transmittance maximum (13, 14) or a transmittance inflection point (15), wherein the transmittance below the connecting line of the local transmittance maximum (5, 6, 7) between 440 nm and 470 nm and of the local transmittance maximum (9, 10, 11) between 570 nm and 590 nm has an essentially convex overall curve (16) with a fluctuation range below 8%.

2. Optical filter according to claim 1, **characterized in that** the essentially convex overall transmittance curve (16) below the connecting line of the local transmittance maximum (5, 6, 7) between 440 nm and 470 nm and the local transmittance maximum (9, 10, 11) between 570 nm and 590 nm forms exactly one transmittance minimum (17, 18, 19).

3. Optical filter according to claim 1 or 2, **characterized in that** the local transmittance maximum (5, 6, 7) between 440 nm and 470 nm has a transmittance between 5 and 15%, the local transmittance minimum (17, 18, 19) between 470 nm and 570 nm has a transmittance below 10%, the local transmittance maximum (9, 10, 11) between 570 nm and 590 nm has a transmittance between 10 and 15 % and between 600 nm and 620 nm the local transmittance maximum (13, 14) has a transmittance between 10 and 20 % or the transmittance inflection point (15) has a transmittance between 5 and 10 %.

4. The optical filter of any one of claims 1 to 3, **characterized by** a plastic matrix having dispersed therein between 400 and 700 ppm of a UV filter pigment, between 33 and 98 ppm of a blue pigment, between 75 and 96 ppm of a yellow pigment, between 124 and 174 ppm of a red pigment, and between 37 and 115 ppm of a green pigment.

## Revendications

1. Filtre optique pour des lunettes de soleil qui présente un facteur de transmission inférieur à 20 % pour des longueurs d'onde de lumière comprises entre 400 nm et 650 nm, **caractérisé en ce que** le spectre de transmission (1, 2, 3), dans la plage de longueurs d'onde de lumière comprise entre 440 nm et 470 nm (4) ainsi qu'entre 570 nm et 590 nm (8), comprend respectivement un maximum de transmission local (5, 6, 7) ou (9, 10, 11), et un maximum de transmission local (13, 14) ou un point selle de transmission (15) dans la plage de longueurs d'onde de lumière comprise entre 600 nm et 620 nm (12), et dans lequel le facteur de transmission en dessous de la ligne de liaison du maximum de transmission local (5, 6, 7) entre 440 nm et 470 nm et du maximum de transmission local (9, 10, 11) entre 570 nm et 590 nm présente une courbe globale (16) sensiblement convexe avec une marge de fluctuation inférieure à 8 %.

2. Filtre optique selon la revendication 1, **caractérisé en ce que** la courbe globale sensiblement convexe (16) du facteur de transmission forme exactement un minimum de transmission (17, 18, 19) en dessous de la ligne qui relie le maximum de transmission local (5, 6, 7) entre 440 nm et 470 nm et le maximum de transmission local (9, 10, 11) entre 570 nm et 590 nm.

3. Filtre optique selon la revendication 1 ou 2, **caractérisé en ce que** le maximum de transmission local (5, 6, 7) entre 440 nm et 470 nm présente un taux de transmission compris entre 5 % et 15 %, le minimum de transmission local (17, 18, 19) entre 470 nm et 570 nm présente un taux de transmission inférieur à 10 %, le maximum local de transmission (9, 10, 11) entre 570 nm et 590 nm présente un facteur de transmission compris entre 10 % et 15 % et entre 600 nm et 620 nm le maximum local de transmission (13, 14) présente un facteur de transmission compris entre 10 % et 20 % ou le point selle de transmission (15) présente un facteur de transmission compris entre 5 % et 10 %.

4. Filtre optique selon l'une quelconque des revendications 1 à 3, **caractérisé par** une matrice plastique dans laquelle sont dispersés entre 400 ppm et 700 ppm d'un pigment filtrant les UV, entre 33 ppm et 98 ppm d'un pigment bleu, entre 75 ppm et 96 ppm d'un pigment jaune, entre 124 ppm et 174 ppm d'un pigment rouge et entre 37 ppm et 115 ppm d'un pigment vert.
